# FASCICULE DE BREVET EUROPEEN

(11) **EP 4 194 333 B1**
(45) Date de publication et mention de la délivrance du brevet: **15.01.2025**
(21) Numéro de dépôt: 22209029.2
(22) Date de dépôt: 23.11.2022
(51) Int. Cl.: B64C 27/12, B64D 27/24, B64D 31/06, H02J 1/10, H01M 8/00, B60L 58/40

(54) **INSTALLATION MOTRICE POUR AERONEF, AERONEF ET PROCEDE DE FONCTIONNEMENT D'UNE TELLE INSTALLATION**
ANTRIEBSANLAGE FÜR EIN LUFTFAHRZEUG, LUFTFAHRZEUG UND VERFAHREN ZUM BETREIBEN EINER SOLCHEN ANLAGE
POWER PLANT FOR AN AIRCRAFT, AIRCRAFT AND METHOD FOR OPERATING SUCH A PLANT

(30) Priorité: 09.12.2021 FR 2113195
(43) Date de publication de la demande: 14.06.2023
(73) Titulaire: Airbus Helicopters, 13725 Marignane Cedex (FR)
(72) Inventeur: GAZZINO, Marc, 13012 MARSEILLE (FR); BINARD, Florian, 13012 MARSEILLE (FR)
(74) Mandataire: GPI Brevets

(56) Documents cités:
- EP-B1- 2 869 380
- EP-B1- 3 521 172
- FR-A1- 3 053 851
- US-A1- 2004 048 118
- US-A1- 2020 108 940
- US-A1- 2021 024 223

## Description

La présente invention se situe dans le domaine technique des installations motrices pour aéronef, et plus particulièrement des installations motrices électriques pour giravion.

L'invention concerne une installation motrice pour la propulsion d'un aéronef et un aéronef comportant une telle installation motrice. L'invention concerne également un procédé de fonctionnement d'une telle installation motrice.

Un aéronef peut comporter un ou plusieurs rotors pour assurer sa sustentation et/ou sa propulsion.

Notamment, un aéronef à voilure tournante, désigné également « giravion », peut comporter par exemple au moins un rotor principal pour assurer sa sustentation, voire sa propulsion.

Un giravion peut aussi comporter un rotor auxiliaire, par exemple un rotor arrière, pour notamment s'opposer au couple en lacet généré par la rotation du rotor principal et transmis au fuselage du giravion afin de contrôler des mouvements en lacet du giravion.

Un giravion peut par ailleurs comporter une ou plusieurs hélices d'avancement destinées principalement à la propulsion du giravion. Cette ou ces hélices d'avancement peuvent également permettre de s'opposer au couple en lacet exercé par le rotor principal sur le fuselage du giravion afin de contrôler ses mouvements en lacet.

Un giravion peut éventuellement comporter plusieurs rotors principaux, par exemple au moins deux rotors principaux, pour assurer sa sustentation, sa propulsion et sa manoeuvrabilité. Un tel giravion peut être désigné par l'expression « giravion multirotor ».

Afin d'entraîner en rotation le ou les rotors, un aéronef est muni d'une installation motrice comportant généralement un ou plusieurs moteurs thermiques mettant en mouvement le ou les rotors via un système mécanique de connexion. On peut distinguer notamment les aéronefs du type « monomoteur », dont l'installation motrice comporte un unique moteur thermique pour entraîner en rotation le ou les rotors, et les giravions du type « bimoteur », dont l'installation motrice possède deux moteurs thermiques à cet effet.

Une installation motrice peut éventuellement comporter également un ou plusieurs moteurs électriques en complément d'un ou de plusieurs moteurs thermiques constituant ainsi une installation motrice dite « hybride ». Les moteurs thermiques et les moteurs électriques peuvent être utilisés indépendamment ou bien en combinaison, simultanément ou séquentiellement pour la sustentation et la propulsion du giravion. Une installation motrice hybride peut comporter une ou plusieurs sources d'énergie électrique afin d'alimenter en énergie électrique chaque moteur électrique.

Une source d'énergie électrique peut comporter par exemple un générateur électrique mis en mouvement par un moteur thermique dédié ou un moteur thermique utilisé également pour l'entraînement d'au moins un rotor. Le générateur électrique transforme alors une énergie mécanique en énergie électrique. Un générateur électrique peut aussi être une machine électrique réversible combinant un mode moteur afin d'entraîner en rotation le ou les rotors de l'aéronef et un mode générateur pour être utilisée comme source d'énergie électrique.

Une source d'énergie électrique peut comporter un dispositif de stockage d'énergie électrique rechargeable, tel qu'une batterie ou un condensateur de grandes dimensions désigné également « super-capacité ». Un générateur électrique peut permettre de recharger en énergie électrique une telle source d'énergie électrique rechargeable. Une source d'énergie électrique peut aussi comporter une pile thermique à usage unique.

Un moteur électrique d'une installation motrice hybride peut par exemple intervenir en cas de panne d'un moteur thermique.

Par exemple, les documents FR 2997382 et FR 2994687 décrivent des installations motrices hybrides d'un giravion munies d'un ou de deux moteurs thermiques, d'un moteur électrique, d'une boîte de transmission principale de puissance destinée à entraîner en rotation le ou les rotors du giravion et d'un moyen de stockage d'énergie électrique. Le moyen de stockage d'énergie électrique comporte par exemple au moins une batterie rechargeable, une super-capacité ou bien une pile thermique à usage unique.

Le document FR 2997382 décrit une installation motrice hybride munie de deux moteurs thermiques. Suite à la détection d'une panne d'un des moteurs thermiques, un moteur électrique fournit si nécessaire une puissance auxiliaire afin de compenser la panne et de permettre au pilote de manoeuvrer en sécurité le giravion sans dégrader l'autre moteur thermique fonctionnel.

Le document FR 2994687 décrit une installation motrice hybride munie d'un unique moteur thermique. Suite à une panne du moteur thermique, un moteur électrique fournit une puissance mécanique afin d'obtenir une marge de manoeuvre additionnelle lors d'une phase de vol en autorotation.

Par ailleurs, un moteur électrique peut aussi être implanté pour limiter la puissance de chaque moteur thermique d'une installation motrice hybride.

Par exemple, le document FR 2952907 décrit une installation motrice hybride comportant un unique moteur thermique, une boîte de transmission principale destinée à entraîner en rotation un rotor principal d'un giravion, une boîte de transmission arrière destinée à entraîner en rotation un rotor auxiliaire du giravion ainsi qu'un premier moteur électrique mécaniquement lié à la boîte de transmission principale et un deuxième moteur électrique mécaniquement lié à la boîte de transmission arrière. L'installation motrice hybride comporte au moins une batterie pour alimenter électriquement le premier et le deuxième moteurs électriques.

Le document KR 2003/0073295 décrit un hélicoptère à propulsion électrique muni d'une installation motrice comportant une pile à combustible et un moteur électrique. Seule la pile à combustible alimente électriquement le moteur électrique. L'hélicoptère comporte également un réservoir de stockage du combustible, à savoir de l'hydrogène, ainsi qu'au moins une batterie électrique. La batterie électrique peut être utilisée pour alimenter électriquement des équipements électriques de sécurité, tels qu'un train d'atterrissage. La batterie électrique peut aussi être utilisée en cas de panne ou de non fonctionnement de la pile à combustible pour alimenter le moteur électrique de l'installation motrice en énergie électrique pendant un temps limité afin de réaliser un atterrissage d'urgence.

Le document US 2020108940 décrit un système de puissance hybride comprenant un contrôleur de puissance adapté pour être en communication avec une première source de puissance, une seconde source de puissance et une charge. Le contrôleur de puissance est configuré pour : commander la décharge de la première source d'énergie sans permettre la décharge de la deuxième source d'énergie pour alimenter la charge lorsqu'une puissance absorbée par la charge est supérieure à une puissance seuil prédéterminée pendant une période de temps ; et commander la décharge de la deuxième source d'énergie pour alimenter la charge lorsque la puissance absorbée par la charge est supérieure à la puissance seuil prédéterminée à partir de la fin de la période de temps. U

Le document EP 3521172 décrit un système de commande pour aéronef et procédé de fourniture de puissance d'entraînement pour un aéronef. U

Le document US 2021024223 décrit un réseau électrique alimentant un aéronef sans régulation de tension, impliquant la régulation de la tension interne du dispositif de production d'énergie électrique en fonction de la première alimentation du réseau électrique principal basée sur la batterie. U

Le document FR 3053851 décrit un dispositif de contrôle pour un système d'alimentation électrique d'une voiture, par exemple, qui comporte des éléments de commutation adaptés à une première configuration et à une seconde configuration dans laquelle la pile à combustible alimente directement le circuit d'entraînement tandis que le module convertisseur est déconnecté de la pile.

Le document EP 2869380 décrit un dispositif de commande, une unité de pile à combustible et un procédé de commande.

Le document US 2004048118 décrit un système de pile à combustible pour véhicule, avec un contrôleur qui sélectionne l'un des multiples modes de fonctionnement en fonction de l'état de fonctionnement de la centrale électrique, lorsque le véhicule est en état d'attente.

La présente invention a alors pour but de proposer un procédé alternatif de contrôle d'une installation motrice ayant au moins une pile à combustible alimentant électriquement au moins un moteur électrique, afin de fournir le besoin requis en puissance mécanique. La présente invention a aussi pour but de proposer une telle installation motrice et un aéronef comportant une telle installation motrice.

La présente invention concerne tout d'abord un procédé de contrôle une installation motrice comportant au moins un système d'entraînement, le système d'entraînement comportant une source d'énergie électrique et un dispositif moteur relié électriquement à la source d'énergie électrique. La source comporte un générateur électrique et un système de stockage d'énergie électrique agencé électriquement en parallèle du générateur électrique, le générateur électrique étant muni d'au moins une pile à combustible, et le système de stockage d'énergie électrique est muni d'au moins un dispositif de stockage d'énergie électrique rechargeable et d'un convertisseur électrique réversible.

L'installation motrice est notamment destinée à la propulsion d'un véhicule, et d'un aéronef en particulier, tel un aéronef à voilure tournante muni d'au moins un rotor. L'installation motrice permet par exemple d'entraîner en rotation le ou les rotors d'un aéronef par l'intermédiaire d'une ou de plusieurs boîtes de transmission mécanique de puissance.

En étant agencé électriquement en parallèle du générateur électrique, le système de stockage d'énergie électrique peut avantageusement délivrer de façon transitoire ou permanente une puissance électrique complémentaire destiné au dispositif moteur, à savoir en complément de la puissance électrique délivrée par le générateur électrique.

Ce procédé de contrôle de l'installation motrice comporte les étapes suivantes :
- émission d'un premier courant électrique par le générateur électrique,
- mesure d'une première tension électrique relative au premier courant électrique à des bornes électriques du générateur électrique à l'aide d'un dispositif de mesure,
- comparaison de la première tension électrique avec un seuil de tension électrique à l'aide d'un dispositif de gestion de l'installation motrice, et
- émission d'un deuxième courant électrique avec une deuxième tension électrique aux bornes du système de stockage d'énergie électrique lorsque la première tension électrique est inférieure au seuil de tension électrique.

Le procédé de contrôle d'une installation motrice selon l'invention est remarquable en ce que, lors de l'étape d'émission d'un premier courant électrique par le générateur électrique, ladite au moins une pile à combustible fonctionne alternativement selon plusieurs modes de fonctionnement associés respectivement à des points de fonctionnement prédéterminés de ladite au moins une pile à combustible, le seuil de tension électrique correspondant audit point de fonctionnement prédéterminé pour chaque mode de fonctionnement, de sorte que :
- soit selon un premier mode de fonctionnement associé à un premier point de fonctionnement prédéterminé, une dissipation thermique de ladite au moins une pile à combustible est réduite, ou
- soit selon un deuxième mode de fonctionnement associé à un deuxième point de fonctionnement prédéterminé, une puissance maximale est fournie par ladite au moins une pile à combustible, ou
- soit selon un troisième mode de fonctionnement associé à un troisième point de fonctionnement prédéterminé, une consommation de combustible de ladite au moins une pile à combustible est limitée.

L'expression « une dissipation thermique de ladite au moins une pile à combustible est réduite » signifie que la dissipation thermique de ladite au moins une pile à combustible dans le premier mode de fonctionnement est réduite par rapport à la dissipation thermique de ladite au moins une pile à combustible dans les deux autres modes de fonctionnement.

De façon similaire, l'expression « une consommation de combustible de ladite au moins une pile à combustible est limitée » signifie que la consommation de combustible de ladite au moins une pile à combustible est limitée par rapport à la consommation de combustible de ladite au moins une pile à combustible dans les deux autres modes de fonctionnement.

Ledit au moins un système d'entraînement peut ainsi être régulé de sorte que lors de l'étape d'émission du premier courant électrique, la ou les piles à combustible du générateur électrique de ce système d'entraînement peut ou peuvent fonctionner au point de fonctionnement prédéterminé associé à un des modes de fonctionnement. Un tel point de fonctionnement de ladite au moins une pile à combustible peut être défini sur la courbe de polarisation de cette pile à combustible. Un tel point de fonctionnement de ladite au moins une pile à combustible peut être caractérisé par un ou des paramètres d'alimentation de la pile à combustible en comburant et/ou en combustible, notamment sa consommation de combustible, par une tension électrique aux bornes de la pile à combustible, et/ou par une puissance électrique fournie par de la pile à combustible par exemple.

Chaque point de fonctionnement peut être prédéterminé pour obtenir une optimisation du fonctionnement de la pile à combustible, du système de stockage d'énergie électrique et/ou du système d'entraînement dans sa globalité. Chaque point de fonctionnement peut ainsi être prédéterminé selon divers critères tels que la préservation des piles à combustible, la puissance délivrée ar le système d'entraînement, la consommation de combustible, la recharge du système de stockage d'énergie électrique, le temps de vol... Chaque point de fonctionnement prédéterminé peut par exemple être établi par essais, simulations ou autres.

Le premier mode de fonctionnement permet ainsi de réduire la dissipation thermique de la ou des piles à combustible, et en conséquence de réduire la consommation énergétique d'un éventuelle système de refroidissement de la ou des piles à combustible, en comparaison aux autres modes de fonctionnement. La limitation de la dissipation thermique de la ou des piles à combustible peut par exemple être utilisée par temps chaud. Dans ce cas, le système de stockage d'énergie peut fournir la puissance électrique complémentaire nécessaire pour alimenter le dispositif moteur.

Le deuxième mode de fonctionnement associé permet à la ou aux piles à combustible de fournir une puissance électrique importante, voire maximale, lorsque le besoin en puissance mécanique de l'installation motrice est important, par exemple pour les phases de décollage, d'atterrissage ou de vol stationnaire lorsque l'installation motrice équipe un aéronef à voilure tournante. Le deuxième mode de fonctionnement peut aussi permettre la recharge du ou des dispositifs de stockage d'énergie électrique.

Le troisième mode de fonctionnement permet de limiter, voire d'optimiser, la consommation de combustible par la ou les piles à combustibles, pour uniquement l'entraînement en rotation du ou des rotors de l'aéronef, ou alternativement pour simultanément l'entraînement en rotation du ou des rotors de l'aéronef et la recharge du ou des dispositifs de stockage d'énergie électrique. Dans ce cas, le système de stockage d'énergie peut également fournir la puissance électrique complémentaire nécessaire pour alimenter le dispositif moteur si besoin.

Ce troisième point de fonctionnement prédéterminé peut par exemple correspondre à un point d'endurance maximale, permettant une optimisation de la consommation en combustible par rapport à la puissance électrique fournie. Lorsque l'installation motrice équipe un aéronef, ce troisième point de fonctionnement prédéterminé permet par exemple à l'aéronef de couvrir une distance importante, voire maximale par rapport à la quantité de carburant consommée, en privilégiant l'autonomie de l'aéronef et non sa vitesse.

Quel que soit ce point de fonctionnement prédéterminé, il peut être soit fixe et mémorisé, par exemple dans une mémoire du dispositif de gestion, soit paramétrable à l'aide d'une interface homme machine soit variable en fonction des conditions atmosphérique, telles que la température et/ou la pression atmosphérique par exemple, et/ou de la phase de vol ou la mission en cours, par exemple, un vol en palier, un décollage, un atterrissage, un vol stationnaire ou encore un treuillage....

Au cours de ces différents modes de fonctionnement, lors d'une augmentation importante de la puissance que doit délivrer l'installation motrice, la tension électrique du courant électrique délivré par la ou les piles à combustible, et donc aux bornes de ce générateur, peut diminuer de façon transitoire le temps que la ou les piles à combustible répondent à cette sollicitation et fournissent la puissance électrique requise. Cette baisse de la tension électrique du courant électrique délivré par la ou les piles à combustible a pour conséquence une baisse de tension électrique du courant électrique aux bornes du dispositif moteur. La puissance mécanique fournie par le générateur électrique de l'installation motrice peut alors être transitoirement inférieure à la puissance attendue rendant par exemple difficile la réalisation de la manoeuvre en cours.

En effet, la pile à combustible peut comporter un moyen de gestion régulant le débit d'alimentation du combustible en réponse aux différentes sollicitations en courant électrique. Par exemple, suite à une forte sollicitation, la tension électrique du courant électrique délivré par la ou les piles à combustible diminue dans un premier temps, ce qui provoque en réaction une augmentation du débit d'alimentation du combustible par le moyen de gestion, puis une augmentation de la tension électrique du courant électrique délivré par la ou les piles à combustible afin de répondre à la forte sollicitation.

Le système de stockage d'énergie électrique de l'installation motrice permet alors de compenser une chute de tension électrique du premier courant électrique aux bornes du générateur électrique lors d'une demande instantanée de puissance importante. L'installation motrice peut ainsi fournir la puissance requise sensiblement instantanément et permettre, par exemple, la réalisation de la manoeuvre souhaitée par l'aéronef équipé de cette installation motrice.

La fourniture d'une puissance électrique complémentaire par le système de stockage d'énergie électrique est soumise à la disponibilité d'énergie électrique dans le ou les dispositifs de stockage d'énergie électrique rechargeables, à savoir à la quantité d'énergie électrique contenue dans le ou les dispositifs de stockage d'énergie électrique rechargeables.

Lorsque la tension électrique aux bornes du générateur électrique est supérieure au besoin du dispositif moteur, la recharge de chaque dispositif de stockage d'énergie électrique rechargeable est possible à l'aide du surplus de puissance électrique fournie par le générateur électrique, via le convertisseur électrique réversible.

La puissance de recharge du ou des dispositifs de stockage peut être ajustée de manière à faire fonctionner la pile à combustible à un des points de fonctionnement prédéterminé, selon le mode de fonctionnement utilisé. Ce point de fonctionnement prédéterminé est défini sur la courbe de polarisation de la pile à combustible par les caractéristiques d'alimentation en comburant, généralement l'oxygène de l'air, et en combustible, par exemple l'hydrogène.

Le seuil de tension électrique est par exemple une valeur prédéfinie et fixe, déterminée préalablement en fonction des caractéristiques du dispositif moteur. Le seuil de tension électrique est par exemple égal à une tension électrique minimale permettant d'alimenter électriquement le dispositif moteur de sorte qu'il fournisse un couple suffisant sur un arbre de sortie du dispositif moteur.

Le seuil de tension électrique est par exemple égal à une tension électrique minimale à fournir aux bornes d'un onduleur du dispositif moteur pour alimenter efficacement le ou les moteurs électriques du dispositif moteur. Le seuil de tension électrique peut aussi être égal à une tension électrique comprise dans une plage de tension admissible par l'onduleur du dispositif moteur pour continuer d'utiliser les moteurs électriques dans un domaine de fonctionnement dégradé.

La tension électrique minimale, et par suite le seuil de tension électrique, peuvent être modifiés si les caractéristiques du dispositif moteur sont modifiées ou si le fonctionnement du dispositif moteur est modifié, par exemple si son mode de fonctionnement est changé.

Le seuil de tension électrique peut être aussi ajusté à des fins d'optimisations du système d'alimentation de l'onduleur du dispositif moteur. Par exemple, le seuil de tension électrique peut être ajusté pour permettre une optimisation du rendement du fonctionnement de la pile à combustible, avec une utilisation maximale du système de stockage d'énergie électrique. Le seuil de tension électrique peut également être ajusté pour permettre une utilisation de la puissance maximale délivrée par la pile à combustible, sans contribution dans ce cas du système de stockage d'énergie électrique. Le seuil de tension électrique peut aussi être ajusté pour permettre une optimisation de la recharge du ou des dispositifs de stockage d'énergie électrique afin de réduire le temps de recharge ou de réduire l'échauffement de ce ou de ces dispositifs de stockage d'énergie électrique.

Ce procédé est par exemple réalisé par un dispositif de gestion de l'installation motrice, comportant éventuellement un calculateur. Le dispositif de gestion ou l'éventuel calculateur peut notamment être configuré pour comparer la première tension électrique et le seuil de tension électrique ainsi que pour éventuellement déterminer la deuxième tension électrique du deuxième courant électrique à fournir par le système de stockage d'énergie électrique.

La deuxième tension électrique du deuxième courant électrique à fournir par le système de stockage d'énergie électrique est par exemple sensiblement égale au seuil de tension électrique.

Ainsi, le système de stockage d'énergie électrique permet de compenser une chute de tension électrique du générateur électrique, due à une chute de tension électrique d'au moins une pile à combustible du générateur électrique grâce à la puissance électrique complémentaire fournie par ledit au moins un dispositif de stockage d'énergie électrique rechargeable. L'installation motrice peut ainsi fournir la puissance requise sensiblement instantanément, le système de stockage d'énergie électrique couvrant les variations de la tension électrique du premier courant électrique fourni par le générateur électrique.

La deuxième tension électrique du deuxième courant électrique à fournir par le système de stockage d'énergie électrique peut aussi être différente de ce seuil de tension électrique tant que cette deuxième tension électrique permet d'alimenter électriquement le dispositif moteur de sorte que le ou les moteurs électriques soient eux-mêmes suffisamment alimentés. La deuxième tension électrique du deuxième courant électrique peut être supérieure à la tension minimale électrique minimale à fournir aux bornes du dispositif moteur, par exemple aux bornes d'un onduleur du dispositif moteur.

Par ailleurs, l'émission du deuxième courant électrique avec la deuxième tension électrique par le système de stockage d'énergie électrique est réalisée au moins tant que la première tension électrique est inférieure au seuil de tension électrique.

De préférence, un seuil à hystérésis est utilisé. De la sorte, l'émission du deuxième courant électrique avec la deuxième tension électrique par le système de stockage d'énergie électrique est réalisée tant que la première tension électrique est inférieure au seuil de tension électrique majorée par une marge d'hystérésis. Dès que la première tension électrique est supérieure ou égale au seuil de tension électrique majorée par la marge d'hystérésis, l'émission du deuxième courant électrique avec la deuxième tension électrique par le système de stockage d'énergie électrique peut être arrêtée.

Le procédé selon l'invention peut comporter des étapes complémentaires.

Selon un exemple, lorsque la première tension électrique est supérieure à un seuil de recharge, le seuil de recharge étant strictement supérieur au seuil de tension électrique, voire supérieure au seuil de tension électrique majorée par la marge d'hystérésis dans le cas d'un seuil à hystérésis, le procédé peut comporter une étape de recharge en énergie électrique dudit au moins un dispositif de stockage d'énergie électrique, à l'aide du convertisseur électrique réversible, avec une partie du premier courant électrique. De la sorte, ledit au moins un dispositif de stockage d'énergie électrique rechargeable peut être rechargé en énergie électrique afin de disposer en cas de besoin d'une quantité d'énergie électrique nécessaire.

Selon un exemple compatible avec le précédent, l'installation motrice entraînant en rotation au moins un rotor d'un aéronef, lors de l'étape d'émission du premier courant électrique par ledit générateur électrique, le générateur électrique peut délivrer une puissance électrique nominale pour toutes les phases stabilisées de vol de l'aéronef, et lors de l'étape d'émission dudit deuxième courant électrique avec ladite deuxième tension électrique par ledit système de stockage d'énergie électrique, le système de stockage d'énergie alimente électriquement de façon transitoire le dispositif moteur pour les changements de phases de vol ou pour des manoeuvres exigeantes et consommatrices en puissance motrice, telles que des virages ou des ressources par exemple.

Alternativement, lors de l'étape d'émission du premier courant électrique, le générateur électrique peut délivrer une puissance électrique nominale alimentant seul le dispositif moteur pour les phases de vol de croisière de l'aéronef, de vol en descente, de roulage au sol ainsi que le freinage de l'aéronef, et le procédé selon l'invention comporte une étape complémentaire d'émission du deuxième courant électrique par le système de stockage d'énergie électrique indépendamment de la comparaison de la première tension électrique avec le seuil de tension électrique, au cours de laquelle le système de stockage d'énergie alimente électriquement le dispositif moteur de façon complémentaire au générateur électrique pour les autres phases de vol, à savoir les phases de décollage, d'atterrissage, de vol stationnaire et de vol ascendant, les changements de phases de vol ainsi que les manoeuvres exigeantes et consommatrices en puissance motrice.

Selon un exemple compatible avec les précédents, l'installation motrice entraînant en rotation au moins un rotor d'un aéronef, en cas de panne du générateur électrique, le procédé peut comporter une étape d'assistance à une phase de vol en autorotation réalisée à l'aide d'un deuxième courant électrique émis par le système de stockage d'énergie.

En outre, lorsque l'installation motrice comporte au moins deux systèmes d'entraînement, les systèmes d'entraînement peuvent fonctionner de différentes manières.

Par exemple, les systèmes d'entraînement peuvent fonctionner de manière symétrique à l'aide d'un système de répartition de l'installation motrice. Le procédé peut alors comporter une étape de répartition, réalisée à l'aide du système de répartition, répartissant une puissance électrique de l'installation motrice de façon sensiblement équivalente et symétrique entre les au moins deux systèmes d'entraînement.

Les systèmes d'entraînement peuvent aussi fonctionner de manière dissymétrique, par exemple lors de ladite étape de répartition, répartissant la puissance électrique de l'installation motrice de façon non symétrique entre les au moins deux systèmes d'entraînement.

Le système de répartition peut ainsi gérer la répartition de puissance entre le générateur, à savoir la ou les piles à combustible, et le système de stockage d'énergie, à savoir le ou les dispositifs de stockage d'énergie électrique rechargeable, en fonction de la demande de puissance associée par exemple à la phase de vol en cours. Le système de répartition peut notamment établir des consignes de répartition de la puissance pour le générateur et pour le système de stockage d'énergie.

Le système de répartition peut aussi de gérer la puissance de recharge du ou des dispositifs de stockage d'énergie électrique rechargeable du système de stockage d'énergie en fonction de la puissance disponible au niveau de la ou les piles à combustible du générateur.

Le dispositif de gestion peut comporter le système de répartition.

Au moins un des systèmes d'entraînement peut par exemple être régulé de sorte que lors de l'étape d'émission du premier courant électrique, la ou les piles à combustible du générateur électrique d'un système d'entraînement peut ou peuvent fonctionner selon les trois modes de fonctionnement précédemment décrits associés respectivement à des points de fonctionnement prédéterminé. Le ou les autres ou les systèmes d'entraînement fonctionnent alors pour fournir le complément de puissance mécanique requis.

Le démarrage de la ou des piles à combustible peut être effectué à l'aide du système de stockage qui fournit l'énergie électrique d'une part aux dispositifs éventuels nécessaires au fonctionnement de la pile à combustible, tels qu'un système de refroidissement, un système d'alimentation en combustible, un compresseur d'air et/ou des capteurs, et d'autre part à la pile à combustible proprement dite pour qu'elle puisse produire de l'énergie électrique. Le système de stockage peut aussi alimenter un dispositif de réchauffement de la pile à combustible avant sa mise en fonctionnement.

Dans le cas où l'installation motrice comporte plusieurs piles à combustible, le démarrage de chaque pile à combustible peut se faire de manière identique, en parallèle les unes des autres à l'aide du système de stockage afin de réduire les temps de mise en fonctionnement. Dans ce cas, le séquencement peut être géré par le dispositif de gestion ou par un superviseur dédié.

Afin de réduire les dimensions et la masse du système de stockage, une mise en fonctionnement séquentielle des piles à combustible peut être réalisée, le système de stockage fournit l'énergie électrique nécessaire au démarrage d'une pile à combustible qui assure ensuite elle-même la fourniture de l'énergie électrique nécessaire au démarrage de l'autre ou des autres piles à combustible.

Par ailleurs, lorsque l'installation motrice équipe un aéronef, un système d'entraînement peut, par l'intermédiaire du générateur électrique et/ou du système de stockage, alimenter d'autres équipements de l'aéronef en énergie électrique, via un ou plusieurs convertisseurs DC/DC. La première tension électrique relative au premier courant électrique fournie par le générateur électrique prend alors en compte le besoin de ces équipements. Ces équipements sont par exemple reliés à un réseau de bord du véhicule lui-même relié électriquement à la source d'au moins un système d'entraînement de l'installation motrice.

Une génératrice de courant électrique entraînée par la chaîne de transmission de puissance reliée au dispositif moteur du système d'entraînement et convertissant de l'énergie mécanique en énergie électrique peut également alimenter électriquement ces équipements, via éventuellement le réseau de bord.

La ou les piles à combustible peuvent être de différentes technologies. Une pile à combustible peut être par exemple à membrane d'échange de protons, désignée également par l'acronyme PEM pour la désignation en langue anglaise « Proton Electro Membrane », à basse température ou haute température. Une pile à combustible peut aussi être à oxydes solides désignée également par l'acronyme SOFC pour la désignation en langue anglaise « Solid Oxide Fuel Cells ». D'autres types de piles à combustible peuvent aussi être utilisés.

Le générateur électrique de l'installation motrice peut comporter des piles à combustible d'une même technologie, voire identiques. Alternativement, le générateur électrique de l'installation motrice peut comporter des piles à combustible de technologies différentes.

L'installation motrice peut aussi contenir au moins un réservoir relié à ladite au moins une pile à combustible et contenant le combustible alimentant ladite au moins une pile à combustible. Le combustible est par exemple de l'hydrogène ou le gaz naturel.

Un dispositif de stockage d'énergie électrique rechargeable peut être de différents types, et comporter par exemple un accumulateur, une batterie rechargeable ou encore une super-capacité. Le système de stockage d'énergie électrique peut comporter des dispositifs de stockage d'énergie électrique rechargeables de plusieurs types différents afin d'une part de s'adapter au besoin de l'installation motrice, les pics de charge et les transitoires de charge électriques relatifs au fonctionnement du dispositif moteur requérant à la fois une capacité de stockage élevée et une puissance élevée et, d'autre part, d'optimiser leurs performances et leurs durées de vie. Les pics de charge électriques correspondent par exemple à une augmentation du besoin en puissance électrique de très courte durée, de l'ordre d'une dizaine à quelques centaines de millisecondes. Les transitoire de charge électriques correspondent quant à eux à une augmentation du besoin en puissance électrique de plus longue durée, de l'ordre de quelques secondes à quelques dizaines de secondes.

Le générateur électrique peut être dimensionné pour fournir seul la puissance électrique nécessaire pour toutes les phases de fonctionnement stabilisées du dispositif moteur, le système de stockage d'énergie fournissant de façon transitoire la puissance électrique complémentaire nécessaire pour les changements de phases de fonctionnement du dispositif moteur et lors des pics de puissance par exemple. Lorsque l'installation motrice équipe un aéronef, les phases de fonctionnement stabilisées du dispositif moteur correspondent par exemple aux phases de vol de croisière, de décollage, d'atterrissage, de vol stationnaire ou encore de vol ascendant ou descendant. Le système de stockage d'énergie fournit alors la puissance électrique complémentaire notamment lors des changements de phases de vol et les manoeuvres exigeantes et consommatrices en puissance motrice.

Afin de limiter sa masse, voire sa consommation en combustible, le générateur électrique peut être dimensionné pour fournir seul la puissance électrique nécessaire pour certaines phases de fonctionnement du dispositif moteur, par exemples les phases de vol qui ne sont pas les plus exigeantes et consommatrices en puissance électrique consommée, telles que la phase de roulage au sol, la phase de vol d'avancement, la phase de vol de croisière en palier ou la phase de vol en descente pour un aéronef. Le système de stockage d'énergie fournit alors la puissance électrique complémentaire nécessaire lors des autres phases de fonctionnement du dispositif moteur, telles que la phase de décollage, d'atterrissage, de vol stationnaire et de vol ascendant pour un aéronef. Le système de stockage d'énergie fournit également de façon transitoire la puissance électrique complémentaire nécessaire lors des changements de phases de fonctionnement du dispositif moteur et lors des pics de puissance par exemple.

Par ailleurs, lorsque l'installation motrice équipe un aéronef à voilure tournante, le système de stockage peut, en cas de panne du générateur électrique, fournir un appoint de puissance pour assister un pilote de l'aéronef pour la réalisation d'une phase de vol en autorotation.

Le système de stockage d'énergie électrique comporte un convertisseur électrique réversible par exemple de type continu-continu désigné également convertisseur DC/DC. Ce convertisseur électrique réversible permet de convertir le courant électrique continu fourni par le ou les dispositifs de stockage d'énergie électrique rechargeables en un autre courant électrique continu avec une tension électrique et/ou une intensité électrique régulées dans des plages prédéterminées pour alimenter électriquement le dispositif moteur en complément du générateur électrique.

De plus, ce convertisseur est réversible et permet également à ce titre de convertir un courant électrique continu entrant dans le convertisseur en un autre courant électrique continu avec une tension électrique et/ou une intensité électrique différente pour alimenter électriquement le ou les dispositifs de stockage d'énergie électrique rechargeables et de le ou les recharger en énergie électrique si besoin. Ce courant électrique continu entrant est par exemple fourni par le générateur électrique, en surplus de l'alimentation électrique du dispositif moteur.

De la sorte, l'installation motrice permet d'alimenter électriquement, avec le générateur électrique, de façon permanente et efficace, le dispositif moteur, par exemple pour l'entraînement d'un ou de plusieurs rotors d'un aéronef. De plus, l'installation motrice permet de recharger le ou les dispositifs de stockage d'énergie électrique rechargeables du système de stockage d'énergie électrique de l'installation motrice avec le générateur électrique.

La présente invention vise aussi une installation motrice configurée pour mettre en oeuvre le procédé de contrôle précédemment décrit.

Cette installation motrice comporte notamment au moins un système d'entraînement muni d'une source d'énergie électrique et d'un dispositif moteur relié électriquement à la source d'énergie électrique. La source comporte un générateur électrique muni d'au moins une pile à combustible et un système de stockage d'énergie électrique agencé électriquement en parallèle du générateur électrique et muni d'au moins un dispositif de stockage d'énergie électrique rechargeable et d'un convertisseur électrique réversible.

L'installation motrice est notamment destinée à la propulsion d'un véhicule, et d'un aéronef en particulier, tel un aéronef à voilure tournante muni d'au moins un rotor. L'installation motrice permet par exemple d'entraîner en rotation le ou les rotors d'un aéronef par l'intermédiaire d'une ou de plusieurs boîtes de transmission mécanique de puissance

L'installation motrice selon l'invention peut de plus comprendre une ou plusieurs des caractéristiques qui suivent, prises seules ou en combinaison.

Selon un exemple, le dispositif moteur peut comporter un onduleur et au moins un moteur électrique. Ledit au moins un moteur électrique est dans ce cas un moteur électrique fonctionnant avec un courant électrique alternatif. Un onduleur est un convertisseur de type continu-alternatif désigné également convertisseur DC/AC. Cet onduleur permet dans le cas présent de convertir un courant électrique continu fourni par le générateur électrique et/ou par le système de stockage d'énergie électrique en un courant électrique alternatif pour alimenter électriquement ledit au moins un moteur électrique.

Selon un exemple compatible avec le précédent, le générateur électrique peut comporter au moins deux piles à combustible agencées électriquement en parallèle. Ces au moins deux piles à combustible peuvent être identiques ou bien de types différents par exemple.

Selon un exemple compatible avec les précédents, le générateur électrique peut comporter au moins deux piles à combustible agencées électriquement en série. Ces au moins deux piles à combustible peuvent être identiques ou bien de types différents par exemple.

Lorsque le générateur électrique comporte au moins deux piles à combustible, lesdites piles à combustible sont dimensionnées pour fonctionner simultanément et pour fournir conjointement une puissance du générateur électrique pour le fonctionnement du dispositif moteur.

Selon un exemple compatible avec les précédents, l'installation motrice peut comporter un réseau électrique, le générateur électrique et le système de stockage d'énergie électrique étant reliés électriquement au réseau électrique de sorte à être reliés électriquement en parallèle entre eux.

La tension électrique de ce réseau électrique peut suivre la courbe de polarisation de la pile à combustible en l'absence d'un courant électrique et de la puissance électrique complémentaire fournis par le système de stockage d'énergie électrique.

Une source d'alimentation électrique extérieure, telle qu'une prise de parc ou une batterie électrique par exemple, peut être reliée à ce réseau pour charger électriquement un ou plusieurs dispositifs de stockage d'énergie électrique rechargeables du système de stockage d'énergie électrique ou pour démarrer une pile à combustible ou chacune des piles à combustible.

Selon un exemple compatible avec les précédents, le dispositif moteur peut comporter un dispositif de contrôle pilotant ledit au moins un moteur électrique, et en particulier la vitesse de rotation et/ou le couple dudit au moins un moteur électrique. Le dispositif de contrôle peut par exemple utiliser un capteur de vitesse mesurant la vitesse de rotation du moteur électrique et/ou un capteur de couple mesurant le couple du moteur électrique et/ou d'un arbre de sortie du dispositif moteur.

Selon un exemple compatible avec les précédents, l'installation motrice peut comporter un dispositif de gestion, pour contrôler l'installation motrice, et en particulier la ou les piles à combustible ainsi que le ou les dispositifs de stockage d'énergie électrique rechargeables du système de stockage d'énergie électrique. Le dispositif de gestion peut être relié à un éventuel dispositif de contrôle du dispositif moteur pour recevoir une information relative au couple au niveau du dispositif moteur, par exemple sur un moteur électrique ou un arbre de sortie du dispositif moteur.

L'installation motrice peut comporter un dispositif de mesure relié électriquement à des bornes électriques du générateur électrique et configuré pour mesurer une tension électrique à ces bornes électriques du générateur électrique. L'installation motrice peut aussi comporter un dispositif de mesure relié électriquement à des bornes électriques du système de stockage d'énergie électrique et configuré pour mesurer une tension électrique à ces bornes électriques du système de stockage d'énergie électrique. Chaque dispositif de mesure peut être relié au dispositif de gestion ou bien faire partie du dispositif de gestion.

Selon un exemple compatible avec les précédents, l'installation motrice selon l'invention peut comporter au moins deux systèmes d'entraînement reliés à une chaîne de transmission de puissance commune. Par exemple, lorsque l'installation motrice selon l'invention équipe un aéronef, chaque système d'entraînement est relié à une chaîne de transmission de puissance commune. Les au moins deux systèmes d'entraînement peuvent ainsi fonctionner indépendamment l'un de l'autre pour fournir une puissance mécanique à la chaîne de transmission de puissance commune. Par exemple, la chaîne de transmission de puissance commune comporte une boîte de transmission de puissance entraînant un ou plusieurs rotors dans le cas d'un aéronef.

Dans le cas d'une utilisation d'au moins deux systèmes d'entraînement, chaque système d'entraînement peut être dimensionné de plusieurs manières.

Par exemple, les systèmes d'entraînement peuvent être redondants et être capables de fournir seuls la puissance mécanique nécessaire à chaque instant. Cette architecture est sécurisante, un système d'entraînement pouvant assurer seul le fonctionnement de l'installation motrice selon l'invention en cas de panne d'un autre système d'entraînement.

Selon un autre exemple, lorsque l'installation motrice selon l'invention équipe un aéronef à voilure tournante, chaque système d'entraînement peut être dimensionné pour fournir seul une puissance mécanique nécessaire pour réaliser une phase le vol à une vitesse modéré, dite par exemple « économique ». Un tel dimensionnement des systèmes d'entraînement peut permettre d'optimiser la masse de l'installation motrice, ainsi que le volume de l'installation motrice tout en permettant d'assurer une fin de vol et l'atterrissage en sécurité dans le cas de la panne d'au moins un des systèmes d'entraînement.

La présente invention vise enfin un aéronef comportant une installation motrice telle que précédemment décrite et au moins un rotor entraîné en rotation par cette installation motrice, via une chaîne de transmission de puissance reliée au dispositif moteur du ou des systèmes d'entraînement de l'installation motrice.

L'invention et ses avantages apparaîtront avec plus de détails dans le cadre de la description qui suit avec des exemples donnés à titre illustratif en référence aux figures annexées qui représentent :
- la figure 1, une vue d'un giravion selon l'invention,
- la figure 2, un exemple d'installation motrice selon l'invention,
- la figure 3, un exemple d'installation motrice selon l'invention, et
- la figure 4, un schéma synoptique d'un procédé de contrôle d'une installation motrice comportant au moins un système d'entraînement.

Les éléments présents dans plusieurs figures distinctes sont affectés d'une seule et même référence.

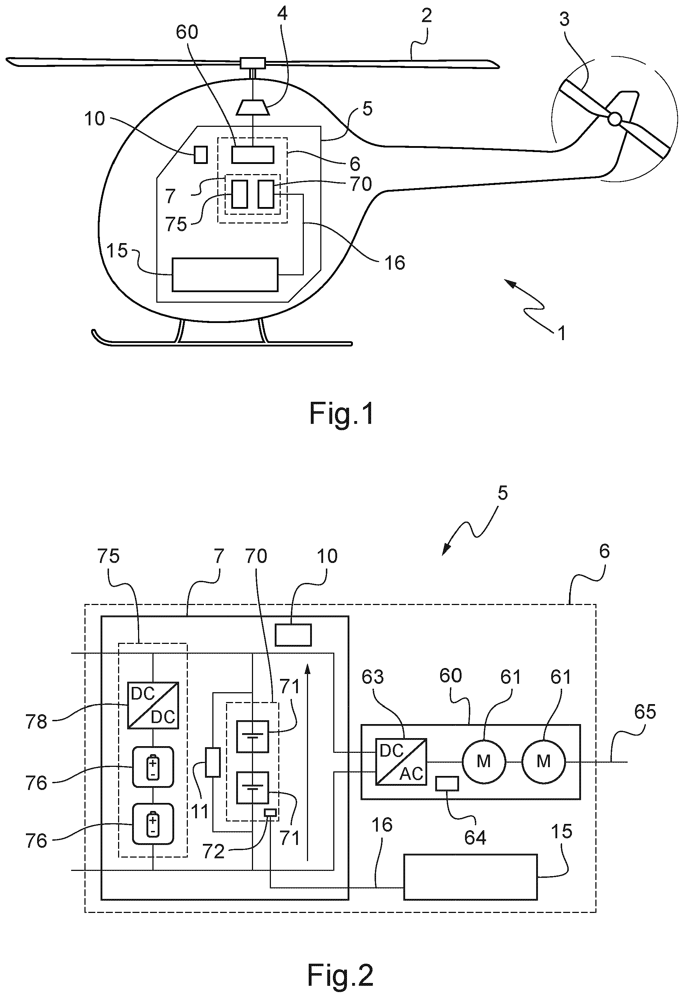

[Fig 1] La figure 1 représente un aéronef 1 à voilure tournante comportant au moins un rotor principal 2 de sustentation, éventuellement un rotor auxiliaire 3 par exemple agencé au niveau d'une extrémité libre d'une poutre de queue et une boîte de transmission de puissance 4. Le rotor principal 2 et le rotor auxiliaire 3 comportent respectivement chacun des pales. L'aéronef 1 comporte également une installation motrice 5 entraînant en rotation le rotor principal 2 de sustentation et le rotor auxiliaire 3 éventuel par exemple via l'intermédiaire de la boîte de transmission de puissance 4.

L'installation motrice 5 comporte au moins un système d'entraînement 6,6' et un réservoir 15 contenant un combustible, ledit au moins un système d'entraînement 6,6' étant muni d'une source 7,7' d'énergie électrique et d'un dispositif moteur 60,60' relié électriquement à la source 7,7' d'énergie électrique. Le dispositif moteur 60,60' comporte au moins un moteur électrique 61,61' alimenté électriquement par la source 7,7' afin de fournir une puissance mécanique, par exemple à la boîte de transmission de puissance 4, par l'intermédiaire d'un arbre de sortie 65,65'.

L'installation motrice 5 peut également être utilisée pour la propulsion d'autres véhicules, tels que des aéronefs, des véhicules routiers ou des navires par exemple. L'installation motrice 5 peut encore être utilisée pour l'entraînement de tout système mécanique.

[Fig 2] Un premier exemple d'un mode de réalisation de l'installation motrice 5 selon l'invention comportant un seul système d'entraînement 6 est représenté sur la figure 2.

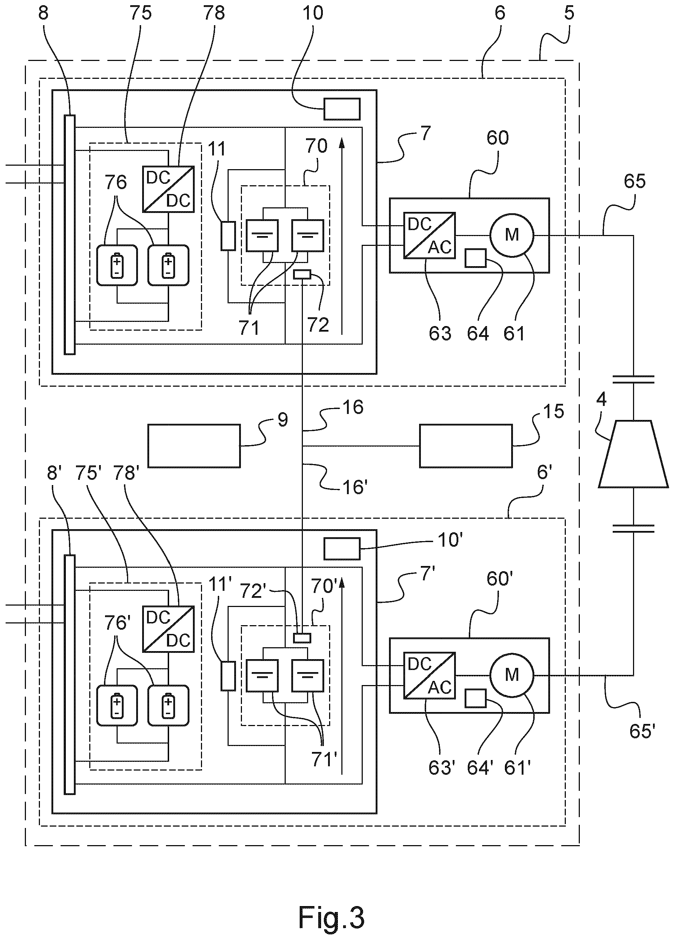

[Fig 3] Un second exemple d'un mode de réalisation de l'installation motrice 5 selon l'invention comportant deux systèmes d'entraînement 6,6' est représenté sur la figure 3. Les deux systèmes d'entraînement 6,6' sont reliés à une chaîne de transmission de puissance commune, à savoir par exemple à une boîte de transmission de puissance 4, respectivement par l'intermédiaire de deux arbres de sortie 65,65'.

Alternativement, une installation motrice 5 selon l'invention peut comporter plus de deux systèmes d'entraînement 6,6'.

Quel que soit le mode de réalisation de l'installation motrice 5 selon l'invention, le dispositif moteur 60,60' peut comporter au moins un moteur électrique 61,61' et un onduleur 63,63' ainsi qu'éventuellement un dispositif de contrôle 64,64' pilotant ledit au moins un moteur électrique 61,61'.

Le dispositif moteur 60,60' du premier exemple de l'installation motrice 5 illustré sur la figure 2 comporte deux moteurs électriques 61 agencés en série. Chaque dispositif moteur 60,60' du second exemple de l'installation motrice 5 illustré sur la figure 3 comporte un seul moteur électrique 61,61'. Alternativement, un dispositif moteur 60,60' peut comporter un seul moteur électrique, deux moteurs électriques ou plus de deux moteurs électriques, indépendamment du nombre de système d'entraînement de l'installation motrice 5.

Selon une autre caractéristique, une source 7,7' comporte un générateur électrique 70,70' et un système de stockage d'énergie électrique 75,75' agencé électriquement en parallèle du générateur électrique 70,70'.

Le générateur électrique 70,70' comporte au moins une pile à combustible 71,71' et fournit un premier courant électrique grâce à une oxydation sur une électrode du combustible couplée à une réduction sur une autre électrode d'un oxydant, généralement l'oxygène contenu dans l'air, réalisées dans ladite au moins une pile à combustible 71,71'. Des conduites 16,16' alimentent la ou les piles à combustible 71,71' en combustible depuis le réservoir 15 via un moyen de gestion 72,72' du générateur électrique 70,70' régulant l'alimentation de chaque pile 71,71' en combustible.

Le générateur électrique 70 du premier exemple de l'installation motrice 5 comporte deux piles à combustible 71 agencées électriquement en série et un moyen de gestion 72. Chaque générateur électrique 70,70' du second exemple de l'installation motrice 5 comporte deux piles à combustible 71 agencées électriquement en parallèle et un moyen de gestion 72,72'. Alternativement, un générateur électrique 70 peut comporter une seule pile à combustible 71, deux piles à combustible 71,71' ou bien plus de deux piles à combustible 71,71' agencées électriquement en série et/ou en parallèle, indépendamment du nombre de système d'entraînement de l'installation motrice 5.

Une pile à combustible 71,71' fournit un courant électrique continu. Le premier courant électrique fournit par le générateur électrique 70,70' est donc continu également avec une première tension électrique fonction des tensions électriques des courants électriques fournis. Toutefois, un générateur électrique 70,70' peut comporter un convertisseur électrique afin de transformer le courant électrique continu fourni par la ou les piles à combustible 71,71' en un courant électrique alternatif ou en un courant électrique continu avec une tension électrique différente par exemple.

L'installation motrice 5 peut aussi comporter un dispositif de refroidissement (non représenté) pour dissiper l'énergie thermique générée par la ou les piles à combustible 71,71' lors de la génération d'un courant électrique.

L'installation motrice 5 peut comporter un dispositif de chauffage (non représenté) pour éventuellement réchauffer la ou les piles à combustible 71,71' avant démarrage.

Selon une autre caractéristique, le système de stockage d'énergie électrique 75,75' comporte au moins un dispositif de stockage d'énergie électrique 76,76' rechargeable et un convertisseur électrique réversible 78,78' de type continu-continu (DC/DC). Un dispositif de stockage d'énergie électrique 76,76' rechargeable comporte par exemple une batterie rechargeable ou une super-capacité.

Le système de stockage d'énergie électrique 75 du premier exemple de l'installation motrice 5 comporte deux dispositifs de stockage d'énergie électrique 76 agencés électriquement en série. Chaque système de stockage d'énergie électrique 75,75' du second exemple de l'installation motrice 5, comporte deux dispositifs de stockage d'énergie électrique 76,76' agencés électriquement en parallèle. Alternativement, un système de stockage d'énergie électrique 75,75' peut comporter un seul dispositif de stockage d'énergie électrique, deux dispositifs de stockage d'énergie électrique ou bien plus de deux dispositifs de stockage d'énergie électrique agencés électriquement en série et/ou en parallèle, indépendamment du nombre de système d'entraînement de l'installation motrice 5.

Un système de stockage d'énergie électrique 75 peut être relié électriquement aux bornes du générateur électrique 70 de sorte à être relié électriquement en parallèle au générateur électrique 70, comme pour le premier exemple de l'installation motrice 5.

Un système d'entraînement 6,6' de l'installation motrice 5 peut alternativement comporter un réseau électrique 8,8' comme pour le second exemple de l'installation motrice 5. Le générateur électrique 70,70' et le système de stockage d'énergie électrique 75,75' de chaque système d'entraînement 6,6' peuvent dans ce cas être reliés électriquement respectivement à ce réseau électrique 8,8'. Ainsi, le générateur électrique 70,70' et le système de stockage d'énergie électrique 75,75' de chaque système d'entraînement 6,6' sont reliés électriquement entre eux en parallèle, via le réseau électrique 8,8'.

Chaque système d'entraînement 6,6' peut également comporter un dispositif de gestion 10,10' permettant de gérer et contrôler le fonctionnement de la ou des piles à combustibles 71,71' et/ou le fonctionnement du ou des dispositifs de stockage d'énergie électrique 76,76'. Le dispositif de gestion 10,10' peut comprendre par exemple au moins un processeur et au moins une mémoire, au moins un circuit intégré, au moins un système programmable, au moins un circuit logique, ces exemples ne limitant pas la portée donnée à l'expression calculateur. Le terme processeur peut désigner aussi bien une unité centrale de traitement connue sous l'acronyme CPU, une unité graphique de traitement GPU, une unité digitale connue sous l'acronyme DSP, un microcontrôleur...

Chaque source 7,7' peut aussi comporter un dispositif de mesure 11,11' configuré pour mesurer la première tension électrique relative au premier courant électrique aux bornes du générateur électrique 70,70'. Le dispositif de mesure 11,11' est relié aux bornes du générateur électrique 70,70'. Chaque source 7,7' peut aussi comporter un dispositif de mesure (non représenté) configuré pour mesurer une deuxième tension électrique d'un deuxième courant électrique aux bornes du fonctionnement du système de stockage d'énergie électrique 75,75'. Ce dispositif de mesure 11,11' est relié aux bornes du système de stockage d'énergie électrique 75,75'.

Chaque dispositif de mesure est relié au dispositif de gestion 10,10' par une liaison sans fil ou une liaison filaire ou fait partie du dispositif de gestion 10,10'.

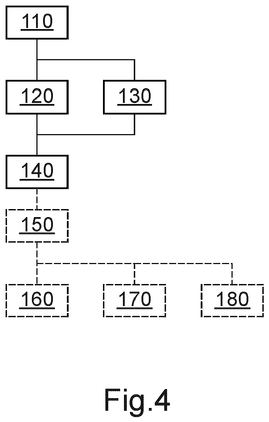

[Fig 4] Quel que soit le mode de réalisation de l'installation motrice 5 selon l'invention, le dispositif de gestion 10,10' de l'installation motrice hybride 5 peut être configuré pour mettre en oeuvre un procédé de contrôle de l'installation motrice 5 dont un schéma synoptique est représenté sur la figure 4. Ce procédé est destiné à une installation motrice 5 comportant au moins un système d'entraînement 6,6' et peut comporter quatre étapes principales.

Tout d'abord, une étape d'émission 110 d'un premier courant électrique est réalisée par le générateur électrique 70,70'. Ce premier courant est émis avec la ou les piles à combustible 71,71' et permet d'alimenter le dispositif moteur 60,60' afin que le ou les moteurs électriques 61,61' entraînent par exemple les rotors 2,3 de l'aéronef 1 par l'intermédiaire de la boîte de transmission de puissance 4. Dans ce cas, une petite quantité de ce premier courant peut éventuellement être aussi fournie à un réseau de bord de l'aéronef 1 pour alimenter des équipements de l'aéronef 1, un autre convertisseur électrique, par exemple de type DC/DC, étant agencé entre l'installation motrice 5 et le réseau de bord.

Ensuite, une étape de mesure 120 d'une première tension électrique relative au premier courant électrique est réalisée à l'aide du dispositif de mesure 11,11'. Cette première tension électrique est mesurée aux bornes électriques du générateur électrique 70,70'. Le dispositif de mesure 11,11' peut transmettre au dispositif de gestion 10,10' un premier signal, numérique ou analogique, électrique ou optique, porteur d'une information relative à cette première tension électrique.

Une étape de comparaison 130 de la première tension électrique avec un seuil de tension électrique est réalisée à l'aide du dispositif de gestion 10,10', parallèlement ou séquentiellement à l'étape de mesure 120. Ce seuil de tension est par exemple égale à une tension électrique minimale caractérisant par exemple la puissance électrique minimale nécessaire transmise par le courant électrique alimentant le dispositif moteur 60,60' afin que le dispositif moteur 60,60' maintienne un couple ou une la vitesse de rotation du ou des rotors 2,3 respectivement égale à une valeur de consigne.

Enfin, le procédé comporte une étape d'émission 140 d'un deuxième courant électrique avec une deuxième tension électrique par le système de stockage d'énergie électrique 75,75' réalisée par exemple lorsque la première tension électrique est inférieure au seuil de tension électrique. Cette émission 140 du second courant électrique est par exemple pilotée par le dispositif de gestion 10,10' en commandant le ou les dispositifs de stockage d'énergie électrique 76,76'. La deuxième tension électrique du deuxième courant électrique est par exemple sensiblement égale au seuil de tension électrique.

De la sorte, le deuxième courant électrique fourni par le système de stockage d'énergie électrique 75,75' permet de compenser une baisse éventuelle de la première tension électrique relative au premier courant électrique fourni par le générateur électrique 70. La source 7,7' permet ainsi, grâce au deuxième courant électrique s'ajoutant au premier courant électrique, de maintenir un courant électrique suffisant alimentant le dispositif moteur 60,60' afin, par exemple que le dispositif moteur 60,60' fournisse l'énergie mécanique nécessaire pour permettre le vol de l'aéronef 1 en sécurité.

L'étape d'émission 140 du deuxième courant électrique avec la deuxième tension électrique par le système de stockage d'énergie électrique est réalisée par tant que la première tension électrique est inférieure au seuil de tension électrique en prenant de préférence en compte une marge d'hystérésis.

Ce procédé de contrôle de l'installation motrice 5 peut comporter des étapes complémentaires.

Le procédé selon l'invention peut par exemple comporter une étape de recharge 160 en énergie électrique dudit au moins un dispositif de stockage d'énergie électrique 76,76' à l'aide du convertisseur électrique réversible 78,78' avec une partie du premier courant électrique lorsque la première tension électrique est supérieure à un seuil de recharge, le seuil de recharge étant strictement supérieur au seuil de tension électrique éventuellement majorée par la marge d'hystérésis. En effet, si la première tension électrique est supérieure au seuil de recharge, le générateur électrique 70,70' peut fournir une énergie électrique supérieure au besoin du dispositif moteur 60,60'. Dès lors, ce surplus d'énergie électrique peut être avantageusement utilisé pour recharger, si besoin, le ou les dispositifs de stockage d'énergie électrique 76,76'.

Le procédé selon l'invention peut aussi comporter, spécifiquement lorsque l'installation motrice 5 équipe un aéronef 1 comportant au moins un rotor 2,3, une étape d'assistance 170 à une phase de vol en autorotation de l'aéronef 1 suite à une panne du générateur électrique 70,70'.

Cette étape d'assistance 170 est réalisée à l'aide du deuxième courant électrique émis par le système de stockage d'énergie 75,75' qui alimente alors seul le dispositif moteur 60,60'. En fonction de la quantité d'énergie électrique disponible dans le ou les dispositifs de stockage d'énergie 76,76', le système de stockage d'énergie 75,75' peut alimenter le dispositif moteur 60,60' au minimum pour l'entrée de l'aéronef dans la phase de vol en autorotation, et éventuellement pour l'atterrissage suite à cette phase de vol en autorotation et/ou pour des manoeuvres d'évitement ou de changement de direction durant la phase de vol en autorotation.

Par ailleurs, lorsque l'installation motrice 5 équipe un aéronef 1 comportant au moins un rotor 2,3, et lors de l'étape d'émission 110 du premier courant électrique, le générateur électrique 70,70' peut délivrer une puissance électrique nominale pour toutes les phases stabilisées de vol de l'aéronef 1, et lors de l'étape d'émission 140 du deuxième courant électrique, le système de stockage d'énergie 75,75' alimente électriquement de façon transitoire le dispositif moteur 60,60' pour les changements de phases de vol ou pour des manoeuvres exigeantes et consommatrices en puissance motrice.

Alternativement, lors de l'étape d'émission 110 du premier courant électrique, le générateur électrique 70,70' peut délivrer une puissance électrique nominale principalement pour les phases de vol de croisière ou de vol descendant de l'aéronef 1, et le procédé selon l'invention comporte une étape complémentaire d'émission 150 d'un deuxième courant électrique par le système de stockage d'énergie 75,75', cette étape complémentaire d'émission 150 étant indépendante de la comparaison de la première tension électrique avec le seuil de tension électrique. le système de stockage d'énergie 75,75 au cours de cette étape complémentaire d'émission 150 alimente électriquement le dispositif moteur 60,60' de façon complémentaire au générateur électrique 70,70' pour les autres phases de vol, par exemple, les phases de décollage, d'atterrissage, de vol stationnaire et de vol ascendant, ainsi que pour les changements de phases de vol et les manoeuvres exigeantes et consommatrices en puissance motrice.

Le procédé selon l'invention peut aussi comporter, lorsque l'installation motrice 5 comporte au moins deux systèmes d'entraînement 6,6', une étape de répartition 180, réalisée à l'aide d'un système de répartition 9 de l'installation motrice 5, répartissant une puissance électrique de l'installation motrice 5 entre les au moins deux systèmes d'entraînement 6,6'. Cette répartition de la puissance électrique de l'installation motrice 5 entre les au moins deux systèmes d'entraînement 6,6' peut être réalisée de façon symétrique, chaque système d'entraînement 6,6' fournissant sensiblement la même puissance électrique, ou de façon dissymétrique, au moins deux systèmes d'entraînement 6,6' fournissant des puissances électriques différentes.

Par ailleurs, lors de l'étape d'émission 110 du premier courant électrique, au moins une pile à combustible 71,71' d'un générateur électrique 70,70' d'une source 7,7' d'au moins un système d'entraînement 6,6' parmi ledit au moins un système d'entraînement 6,6' fonctionne à un point de fonctionnement prédéterminé.

Ce point de fonctionnement prédéterminé peut être déterminé afin que la ou les piles à combustible 71,71' concernées fonctionnent en limitant la dissipation thermique de sorte à réduire la consommation énergétique d'un éventuel système de refroidissement, en fournissant une puissance importante, voire maximale, ou encore en limitant, voire en optimisant, la consommation de combustible de sorte que l'aéronef 1 puisse parcourir une distance importante, voire maximale par rapport au combustible consommé.

Le système de stockage d'énergie électrique 75,75' peut alors fournir le complément d'énergie électrique nécessaire pour le ou les systèmes d'entraînement 6,6' concernés.

Lorsque l'installation motrice 5 comporte au moins deux systèmes d'entraînement 6,6', le ou les autres ou les systèmes d'entraînement 6,6' peuvent aussi fournir le complément de puissance mécanique que doit fournir l'installation motrice 5. Les systèmes d'entraînement 6,6' fonctionnent alors de manière dissymétrique.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

Par exemple, un exemple d'aéronef comportant un rotor principal de sustentation et un rotor auxiliaire a été décrit. Cependant, l'invention peut être appliquée à d'autres types de giravions, comportant par exemple un rotor principal de sustentation et une ou plusieurs hélices d'avancement. L'invention peut aussi être appliquée à un giravion multirotor comportant plusieurs rotors principaux pour assurer la sustentation, la propulsion et la manoeuvrabilité du giravion.

Des modifications peuvent être apportées sans s'écarter de l'invention, l'invention étant définie par les revendications annexées.

## Revendications

1. Procédé de contrôle d'une installation motrice (5) comportant au moins un système d'entraînement (6,6'), ledit système d'entraînement (6,6') comportant une source (7,7') d'énergie électrique et un dispositif moteur (60,60') relié électriquement à ladite source (7,7') d'énergie électrique, ladite source (7,7') comportant un générateur électrique (70,70') et un système de stockage d'énergie électrique (75,75') agencé électriquement en parallèle dudit générateur électrique (70,70'), ledit générateur électrique (70,70') étant muni d'au moins une pile à combustible (71,71'), ledit système de stockage d'énergie électrique (75,75') étant muni d'au moins un dispositif de stockage d'énergie électrique (76,76') rechargeable et d'un convertisseur électrique réversible (78,78'),
ledit procédé comportant les étapes suivantes :
- émission (110) d'un premier courant électrique par ledit générateur électrique (70,70'),
- mesure (120) d'une première tension électrique relative audit premier courant électrique à des bornes électriques dudit générateur électrique (70,70') à l'aide d'un dispositif de mesure (11),
- comparaison (130) de la première tension électrique avec un seuil de tension électrique à l'aide d'un dispositif de gestion (10,10') de ladite installation motrice (5), et
- émission (140) d'un deuxième courant électrique avec une deuxième tension électrique par ledit système de stockage d'énergie électrique (75,75') lorsque ladite première tension électrique est inférieure audit seuil de tension électrique, **caractérisé en ce que**, lors de ladite étape d'émission (110) d'un premier courant électrique par ledit générateur électrique, ladite au moins une pile à combustible (71,71') fonctionne alternativement selon plusieurs modes de fonctionnement associés respectivement à des points de fonctionnement prédéterminés de ladite au moins une pile à combustible (71,71'), ledit seuil de tension électrique correspondant audit point de fonctionnement prédéterminé pour chaque mode de fonctionnement, de sorte que :
- soit selon un premier mode de fonctionnement associé à un premier point de fonctionnement prédéterminé, une dissipation thermique de ladite au moins une pile à combustible (71,71') est réduite, ou
- soit selon un deuxième mode de fonctionnement associé à un deuxième point de fonctionnement prédéterminé, une puissance maximale est fournie par ladite au moins une pile à combustible (71,71'), ou
- soit selon un troisième mode de fonctionnement associé à un troisième point de fonctionnement prédéterminé, une consommation de combustible de ladite au moins une pile à combustible (71,71') est limitée.

2. Procédé selon la revendication 1,
**caractérisé en ce que** ladite deuxième tension électrique est égale au seuil de tension électrique.

3. Procédé selon la revendication 1,
**caractérisé en ce que** ladite deuxième tension électrique du deuxième courant électrique est supérieure ou égale à une tension électrique minimale à fournir aux bornes dudit dispositif moteur (60,60').

4. Procédé selon l'une quelconque des revendications 1 à 3,
**caractérisé en ce que** lorsque ladite première tension est supérieure à un seuil de recharge, ledit seuil de recharge étant strictement supérieur à ladite tension électrique minimale, ledit procédé comporte une étape de recharge (160) en énergie électrique dudit au moins un dispositif de stockage d'énergie électrique (76,76') à l'aide dudit convertisseur électrique réversible (78,78') avec une partie dudit premier courant électrique.

5. Procédé selon l'une quelconque des revendications 1 à 4,
**caractérisé en ce que** ladite installation motrice (5) entraînant en rotation au moins un rotor (2,3) d'un aéronef (1), lors de ladite émission (110) dudit premier courant électrique par ledit générateur électrique (70,70'), ledit générateur électrique (70,70') délivre une puissance électrique nominale pour toutes les phases stabilisées de vol dudit aéronef (1), et lors de ladite émission (140) dudit deuxième courant électrique avec ladite deuxième tension électrique par ledit système de stockage d'énergie électrique (75,75'), ledit système de stockage d'énergie (75,75') alimente électriquement de façon transitoire ledit dispositif moteur (60,60') pour les changements de phases de vol ou pour des manoeuvres consommatrices en puissance motrice.

6. Procédé selon l'une quelconque des revendications 1 à 5,
**caractérisé en ce que** ladite installation motrice (5) entraînant en rotation au moins un rotor (2,3) d'un aéronef (1), lors de ladite étape d'émission (110), ledit générateur électrique (70,70') délivre une puissance électrique nominale pour les phases de vol de croisière dudit aéronef (1), et ledit procédé comporte une étape complémentaire d'émission (150) au cours de laquelle ledit système de stockage d'énergie (75,75') alimente électriquement ledit dispositif moteur (60,60') de façon complémentaire audit générateur électrique (70,70') pour les autres phases de décollage, d'atterrissage, de vol stationnaire et de vol ascendant, les changements de phases de vol et les manoeuvres consommatrices en puissance motrice.

7. Procédé selon l'une quelconque des revendications 1 à 6,
**caractérisé en ce que** ladite installation motrice (5) entraînant en rotation au moins un rotor (2,3) d'un aéronef (1), en cas de panne dudit générateur électrique (70), ledit procédé comporte une étape d'assistance (170) à une phase de vol en autorotation réalisée à l'aide dudit deuxième courant électrique émis par ledit système de stockage d'énergie (75,75') en cas de panne dudit générateur électrique (70).

8. Procédé selon l'une quelconque des revendications 1 à 7,
**caractérisé en ce que** ladite installation motrice (5) comportant au moins deux systèmes d'entraînement (6,6'), ledit procédé comporte une répartition (180), réalisée à l'aide d'un système de répartition (9), d'une puissance électrique de ladite installation motrice (5) de façon symétrique ou non symétrique entre lesdits au moins deux systèmes d'entraînement (6,6').

9. Installation motrice (5) comportant au moins un système d'entraînement (6,6'), ledit au moins un système d'entraînement (6,6') comportant une source (7,7') d'énergie électrique et un dispositif moteur (60,60') relié électriquement à ladite source (7,7') d'énergie électrique, ladite source (7,7') comportant un générateur électrique (70,70') et un système de stockage d'énergie électrique (75,75') agencé électriquement en parallèle dudit générateur électrique (70,70'), ledit générateur électrique (70,70') étant muni d'au moins une pile à combustible (71,71') et ledit système de stockage d'énergie électrique (75,75') étant muni d'au moins un dispositif de stockage d'énergie électrique (76,76') rechargeable et d'un convertisseur électrique réversible (78,78'),
**caractérisé en ce que** ladite installation motrice (5) est configurée pour mettre en oeuvre le procédé selon l'une quelconque des revendications 1 à 8.

10. Installation motrice (5) selon la revendication 9,
**caractérisée en ce que** ledit générateur électrique (70,70') comporte au moins deux piles à combustible (71,71') agencées électriquement en parallèle ou en série.

11. Installation motrice (5) selon l'une quelconque des revendications 9 à 10,
**caractérisée en ce que** ladite installation motrice (5) comporte au moins deux systèmes d'entraînement (6,6') reliés à une chaîne de transmission de puissance commune.

12. Installation motrice (5) selon l'une quelconque des revendications 9 à 11,
**caractérisée en ce que** ladite installation motrice (5) comporte un réseau électrique (8,8'), et ledit générateur électrique (70,70') et ledit système de stockage d'énergie électrique (75,75') sont reliés électriquement audit réseau électrique (8,8').

13. Aéronef (1) comportant une installation motrice (5) et au moins un rotor (2,3) entraîné en rotation par ladite installation motrice (5),
**caractérisé en ce que** ladite installation motrice (5) est selon l'une quelconque des revendications 9 à 12

## Patentansprüche

1. Verfahren zur Steuerung einer Antriebsanlage (5) mit mindestens einem Antriebssystem (6, 6'), wobei das Antriebssystem (6, 6') eine elektrische Energiequelle (7, 7') für und eine Motorvorrichtung (60, 60') umfasst, die elektrisch mit der elektrischen Energiequelle (7, 7') verbunden ist, wobei die Quelle (7, 7') einen elektrischen Generator (70, 70') und ein elektrisches Energiespeichersystem (75, 75') umfasst, das elektrisch parallel zu dem elektrischen Generator (70, 70') angeordnet ist, wobei der elektrische Generator (70, 70') mit mindestens einer Brennstoffzelle (71, 71') versehen ist und das elektrische Energiespeichersystem (75, 75') mit mindestens einer wiederaufladbaren elektrischen Energiespeichervorrichtung (76, 76') und einem reversiblen elektrischen Wandler (78, 78') versehen ist,
wobei das Verfahren die folgenden Schritte umfasst:
- Ausgeben (110) eines ersten elektrischen Stroms durch den elektrischen Generator (70, 70'),
- Messen (120) einer mit dem ersten elektrischen Strom zusammenhängenden ersten elektrischen Spannung an elektrischen Anschlüssen des elektrischen Generators (70, 70') mithilfe einer Messvorrichtung (11),
- Vergleichen (130) der ersten elektrischen Spannung mit einem Schwellenwert der elektrischen Spannung mit Hilfe einer Verwaltungsvorrichtung (10, 10') der Antriebsanlage (5), und
- Ausgeben (140) eines zweiten elektrischen Stroms mit einer zweiten elektrischen Spannung durch das elektrische Energiespeichersystem (75, 75'), wenn die erste elektrische Spannung niedriger als der Schwellenwert der elektrischen Spannung ist,
**dadurch gekennzeichnet, dass** bei dem Schritt des Ausgebens (110) eines ersten elektrischen Stroms durch den elektrischen Generator die mindestens eine Brennstoffzelle (71, 71') abwechselnd in mehreren Betriebsarten arbeitet, die jeweils mit vorgegebenen Betriebspunkten der mindestens einen Brennstoffzelle (71, 71') verknüpft sind, wobei der Schwellenwert der elektrischen Spannung dem vorgegebenen Betriebspunkt für jede Betriebsart entspricht, so dass :
- entweder in einer ersten Betriebsart, die mit einem ersten vorgegebenen Betriebspunkt verknüpft ist, eine Wärmeableitung von der mindestens einen Brennstoffzelle (71, 71') reduziert wird, oder
- in einer zweiten Betriebsart, die mit einem zweiten vorgegebenen Betriebspunkt verknüpft ist, eine maximale Leistung von der mindestens einen Brennstoffzelle (71, 71') geliefert wird, oder
- in einer dritten Betriebsart, die mit einem dritten vorgegebenen Betriebspunkt verknüpft ist, ein Brennstoffverbrauch der mindestens einen Brennstoffzelle (71, 71') begrenzt wird.

2. Verfahren nach Anspruch 1,
**dadurch gekennzeichnet, dass** die zweite elektrische Spannung gleich dem Schwellenwert der elektrischen Spannung ist.

3. Verfahren nach Anspruch 1,
**dadurch gekennzeichnet, dass** die zweite elektrische Spannung des zweiten elektrischen Stroms größer oder gleich einer an den Klemmen der Motorvorrichtung (60, 60') bereitzustellenden elektrischen Mindestspannung ist.

4. Verfahren nach einem der Ansprüche 1 bis 3,
**dadurch gekennzeichnet, dass**, wenn die erste Spannung höher als ein Nachladeschwellenwert ist, wobei der Nachladeschwellenwert strikt höher als die elektrische Mindestspannung ist, das Verfahren einen Schritt des Nachladens (160) von elektrischer Energie der mindestens einen elektrischen Energiespeichervorrichtung (76, 76') mit Hilfe des umkehrbaren elektrischen Wandlers (78, 78') mit einem Teil des ersten elektrischen Stroms umfasst.

5. Verfahren nach einem der Ansprüche 1 bis 4,
**dadurch gekennzeichnet, dass** wenn die Antriebsanlage (5) mindestens einen Rotor (2, 3) eines Luftfahrzeugs (1) in Drehung versetzt, beim Ausgeben (110) des ersten elektrischen Stroms durch den elektrischen Generator (70, 70') der elektrische Generator (70, 70') eine elektrische Nennleistung für alle stabilisierten Flugphasen des Luftfahrzeugs (1) liefert, und beim Ausgeben (140) des zweiten elektrischen Stroms mit der zweiten elektrischen Spannung durch das elektrische Energiespeichersystem (75, 75') das Energiespeichersystem (75, 75') die Motorvorrichtung (60, 60') für Flugphasenwechsel oder für Manöver, die Antriebsleistung verbrauchen, vorübergehend elektrisch versorgt.

6. Verfahren nach einem der Ansprüche 1 bis 5,
**dadurch gekennzeichnet, dass** wenn die Antriebsanlage (5) mindestens einen Rotor (2, 3) eines Luftfahrzeugs (1) in Drehung versetzt, bei dem Schritt des Ausgebens (110) der elektrische Generator (70, 70') eine elektrische Nennleistung für die Reiseflugphasen des Luftfahrzeugs (1) liefert, und dass das Verfahren einen ergänzenden Schritt des Ausgebens (150) umfasst, bei dem das Energiespeichersystem (75, 75') die Triebwerksvorrichtung (60, 60') komplementär zu dem elektrischen Generator (70, 70') für die anderen Start-, Lande-, Schwebe- und Steigflugphasen, Flugphasenwechsel und antriebsleistungsverbrauchende Manöver elektrisch versorgt.

7. Verfahren nach einem der Ansprüche 1 bis 6,
**dadurch gekennzeichnet, dass** wenn die Antriebsanlage (5) mindestens einen Rotor (2, 3) eines Luftfahrzeugs (1) in Drehung versetzt, das Verfahren im Falle eines Ausfalls des elektrischen Generators (70) einen Schritt des Unterstützens (170) einer Autorotationsflugphase umfasst, die mit Hilfe des von dem Energiespeichersystem (75, 75') im Falle einer Störung des elektrischen Generators (70) abgegebenen zweiten elektrischen Stroms durchgeführt wird.

8. Verfahren nach einem der Ansprüche 1 bis 7,
**dadurch gekennzeichnet, dass** die Antriebsanlage (5) mindestens zwei Antriebssysteme (6, 6') aufweist, wobei das Verfahren ein mit Hilfe eines Verteilungssystems (9) durchgeführtes Verteilen (180) einer elektrischen Leistung der Antriebsanlage (5) symmetrisch oder unsymmetrisch auf die mindestens zwei Antriebssysteme (6, 6') umfasst.

9. Antriebsanlage (5) mit mindestens einem Antriebssystem (6, 6'), wobei das mindestens eine Antriebssystem (6, 6') eine elektrische Energiequelle (7, 7') und eine Motorvorrichtung (60, 60') umfasst, die elektrisch mit der elektrischen Energiequelle (7, 7') verbunden ist, wobei die Quelle (7, 7') einen elektrischen Generator (70, 70') und ein elektrisches Energiespeichersystem (75, 75') umfasst, das elektrisch parallel zu dem elektrischen Generator (70, 70') angeordnet ist, wobei der elektrische Generator (70, 70') mit mindestens einer Brennstoffzelle (71, 71') versehen ist und das elektrische Energiespeichersystem (75, 75') mit mindestens einer wiederaufladbaren elektrischen Energiespeichervorrichtung (76, 76') und einem reversiblen elektrischen Wandler (78, 78') versehen ist,
**dadurch gekennzeichnet, dass** die Antriebsanlage (5) konfiguriert ist, um das Verfahren nach einem der Ansprüche 1 bis 8 durchzuführen.

10. Antriebsanlage (5) nach Anspruch 9,
**dadurch gekennzeichnet, dass** der elektrische Generator (70, 70') mindestens zwei Brennstoffzellen (71, 71') umfasst, die elektrisch parallel oder in Reihe angeordnet sind.

11. Antriebsanlage (5) nach einem der Ansprüche 9 bis 10,
**dadurch gekennzeichnet, dass** die Antriebsanlage (5) mindestens zwei Antriebssysteme (6, 6') umfasst, die mit einem gemeinsamen Leistungsübertragungsstrang verbunden sind.

12. Antriebsanlage(5) nach einem der Ansprüche 9 bis 11,
**dadurch gekennzeichnet, dass** die Antriebsanlage (5) ein Stromnetz (8, 8') umfasst und der elektrische Generator (70, 70') und das elektrische Energiespeichersystem (75, 75') elektrisch mit dem Stromnetz (8, 8') verbunden sind.

13. Luftfahrzeug (1) mit einer Antriebsanlage (5) und mindestens einem Rotor (2, 3), der von der Antriebsanlage (5) in Drehung versetzt wird,
**dadurch gekennzeichnet, dass** die Antriebsanlage (5) nach einem der Ansprüche 9 bis 12 ist.

## Claims

1. Method for controlling a power plant (5) comprising at least one drive system (6, 6'), said drive system (6, 6') comprising a source (7, 7') of electric energy and a motor device (60, 60') electrically connected to said source (7, 7') of electric energy, said source (7, 7') comprising an electric generator (70, 70') and an electric energy storage system (75, 75') electrically arranged parallel to said electric generator (70, 70'), said electric generator (70, 70') being provided with at least one fuel cell (71, 71'), said electric energy storage system (75, 75') being provided with at least one rechargeable electric energy storage device (76, 76') and a reversible electric converter (78, 78'),
said method comprising the following steps of:
- transmitting (110) a first electric current by means of said electric generator (70, 70');
- measuring (120) a first electric voltage relating to said first electric current to electric terminals of said electric generator (70, 70') using a measuring device (11);
- comparing (130) the first electric voltage with an electric voltage threshold using a management device (10, 10') of said power plant (5); and
- transmitting (140) a second electric current with a second electric voltage by means of said electric energy storage system (75, 75') when said first electric voltage is below said electric voltage threshold;
**characterised in that**, during said step of transmitting (110) a first electric current by means of said electric generator, said at least one fuel cell (71, 71') operates alternately in several operating modes respectively associated with predetermined operating points of said at least one fuel cell (71, 71'), with said electric voltage threshold corresponding to said predetermined operating point for each operating mode, such that:
- either in a first operating mode associated with a first predetermined operating point, a heat dissipation of said at least one fuel cell (71, 71') is reduced; or
- either in a second operating mode associated with a second predetermined operating point, a maximum power is provided by said at least one fuel cell (71, 71'); or
- either in a third operating mode associated with a third predetermined operating point, a fuel consumption of said at least one fuel cell (71, 71') is limited.

2. Method according to claim 1,
**characterised in that** said second electric voltage is equal to the electric voltage threshold.

3. Method according to claim 1,
**characterised in that** said second electric voltage of the second electric current is greater than or equal to a minimum electric voltage to be provided across the terminals of said motor device (60, 60').

4. Method according to any one of claims 1 to 3,
**characterised in that** when said first voltage is greater than a recharging threshold, with said recharging threshold being strictly higher than said minimum electric voltage, said method comprises a step (160) of recharging said at least one electric energy storage device (76, 76') with electric energy using said reversible electric converter (78, 78') with a portion of said first electric current.

5. Method according to any one of claims 1 to 4,
**characterised in that**, with said power plant (5) setting into rotation at least one rotor (2, 3) of an aircraft (1), during said transmission (110) of said first electric current by means of said electric generator (70, 70'), said electric generator (70, 70') delivers a rated electric power for all the flight-stabilised phases of said aircraft (1), and, during said transmission (140) of said second electric current with said second electric voltage by means of said electric energy storage system (75, 75'), said energy storage system (75, 75') transiently electrically powers said motor device (60, 60') for the changes in flight phases or for drive power consuming manoeuvres.

6. Method according to any one of claims 1 to 5,
**characterised in that**, with said power plant (5) setting into rotation at least one rotor (2, 3) of an aircraft (1), during said transmission step (110) said electric generator (70, 70') delivers a rated electric power for the cruising flight phases of said aircraft (1), and said method comprises an additional transmission step (150), during which said energy storage system (75, 75') electrically powers said motor device (60, 60') in addition to said electric generator (70, 70') for the other phases of take-off, landing, hovering flight and ascending flight, the changes in flight phases and for the drive power consuming manoeuvres.

7. Method according to any one of claims 1 to 6,
**characterised in that**, with said power plant (5) setting into rotation at least one rotor (2,3) of an aircraft (1), in the event of the failure of said electric generator (70), said method comprises a step (170) of assisting an autorotation flight phase carried out using said second electric current transmitted by said energy storage system (75, 75') in the event of the failure of said electric generator (70).

8. Method according to any one of claims 1 to 7,
**characterised in that**, with said power plant (5) comprising at least two drive systems (6, 6'), said method comprises a step (180) of symmetrically or non-symmetrically distributing electric power from said power plant (5) between said at least two drive systems (6, 6'), with said step being carried out using a distribution system (9).

9. Power plant (5) comprising at least one drive system (6, 6'), said at least one drive system (6, 6') comprising a source (7, 7') of electric energy and a motor device (60, 60') electrically connected to said source (7, 7') of electric energy, said source (7, 7') comprising an electric generator (70, 70') and an electric energy storage system (75, 75') electrically arranged parallel to said electric generator (70, 70'), said electric generator (70, 70') being provided with at least one fuel cell (71, 71') and said electric energy storage system (75, 75') being provided with at least one rechargeable electric energy storage device (76, 76') and a reversible electric converter (78, 78'),
**characterised in that** said power plant (5) is configured to implement the method according to any one of claims 1 to 8.

10. Power plant (5) according to claim 9,
**characterised in that** said electric generator (70, 70') comprises at least two fuel cells (71, 71') electrically arranged in parallel or in series.

11. Power plant (5) according to any one of claims 9 to 10,
**characterised in that** said power plant (5) comprises at least two drive systems (6, 6') connected to a common power transmission chain.

12. Power plant (5) according to any one of claims 9 to 11,
**characterised in that** said power plant (5) comprises an electric network (8, 8'), and said electric generator (70, 70') and said electric energy storage system (75, 75') are electrically connected to said electric network (8, 8').

13. Aircraft (1) comprising a power plant (5) and at least one rotor (2,3) set into rotation by said power plant (5),
**characterised in that** said power plant (5) is a power plant according to any one of claims 9 to 12.
